Europäisches Patentamt

European Patent Office

Office européen des brevets

(11) Publication number: **0 123 440**
**B1**

(12) **EUROPEAN PATENT SPECIFICATION**

(45) Date of publication of patent specification: **26.08.87**

(21) Application number: **84302001.7**

(22) Date of filing: **26.03.84**

(51) Int. Cl.⁴: **B 25 B 27/24**

(54) Assembly of valve cotters.

(30) Priority: **23.04.83 GB 8311103**

(43) Date of publication of application:
**31.10.84 Bulletin 84/44**

(45) Publication of the grant of the patent:
**26.08.87 Bulletin 87/35**

(84) Designated Contracting States:
**DE FR IT**

(56) References cited:
**DE-A-2 909 984**
**DE-A-3 001 849**
**DE-A-3 247 589**
**GB-A-1 471 553**
**US-A-3 315 339**
**US-A-3 316 623**

(73) Proprietor: **Gaydon Technology Limited**
**Gaydon Proving Ground Banbury Road**
**Lighthorne Warwickshire CV35 OBL (GB)**

(72) Inventor: **Platt, Peter Jeffrey Mark**
**31 Midhurst Road**
**Kings Norton Birmingham B30 3RB (GB)**
Inventor: **Cartwright, David John**
**139 Leach Green Lane**
**Rednal Birmingham B45 8EL (GB)**
Inventor: **Mills, Robert**
**1 Ridge Street**
**Stourbridge West Midlands (GB)**

(74) Representative: **Waters, Jeffrey**
**ARG Patent Department Cowley Body Plant**
**Cowley Oxford OX4 5NL (GB)**

Courier Press, Leamington Spa, England.

## Description

This invention relates to tools for assembling valve cotters of the split collar type on the stems of poppet valves.

UK Patent Specification No 1 471 553 in the name of a predecessor in title to the present applicants discloses such a tool, which engages the valve spring cup to permit the fitting of cotters, and which has a plunger for engaging the cotters.

United States Patent Specification No 3 315 339 discloses a tool for assembling valve cotters on the stems of poppet valves: this tool has plungers for engaging the valve spring cup and the cotters. The tool is positioned over the valve spring and then struck sharply. The valve spring cup is depressed and, thereafter, the cotter-engaging plunger acts.

However, neither of these tools is suited to rapid repeated operation.

According to the invention, there is provided a locating member movable to a predetermined position to position the end of the stem of a poppet valve biassed against resilient means, a second valve-spring-cup-engaging plunger is movable to depress a valve spring cup sufficiently relative to the stem to permit insertion of split valve cotters, and a cotter-engaging plunger is movable to a position at which the upper end of the split valve cotters lie when in position on the valve stem and when the end of the valve stem has been depressed to the predetermined position, and there is provided at least one cam associated with each plunger for imparting the required axial movements to the plungers in response to a rotary movement of each cam about the same axis.

Cam-actuation of the plungers makes it possible for assembly of one valve and the return of parts to the starting position to be completed quickly with correct synchronisation.

The resilient means against which the locating member acts may be a member which bears against the head of the valve. Preferably the valve spring cup-engaging plunger and/or the cotter-engaging plunger act against resilient means to automatically return them to their starting position after a rotation of the associated cam(s) through one revolution.

The split valve cotters may be positioned in the valve spring cups before the plungers execute their strokes, but it is also possible for them to be fed to required position for assembly via guides.

Although reference has been made to depressing the poppet valve stem and other parts, it is not essential for the valve stem to be upright and to be pushed downwardly. Although this is the preferred method, it is conceivable that assembly could be carried out with other orientations of the valve stem.

Three tools for assembling split valve cotters on the stems of poppet valves will now be described, by way of example, with reference to the accompanying drawings in which:

Figure 1 is an axial cross-section of the first tool;

Figure 2 is an axial cross-section of a part of the second tool; and

Figure 3 is an axial cross-section of a part of the third tool.

Like parts are given the same reference numerals in each figure.

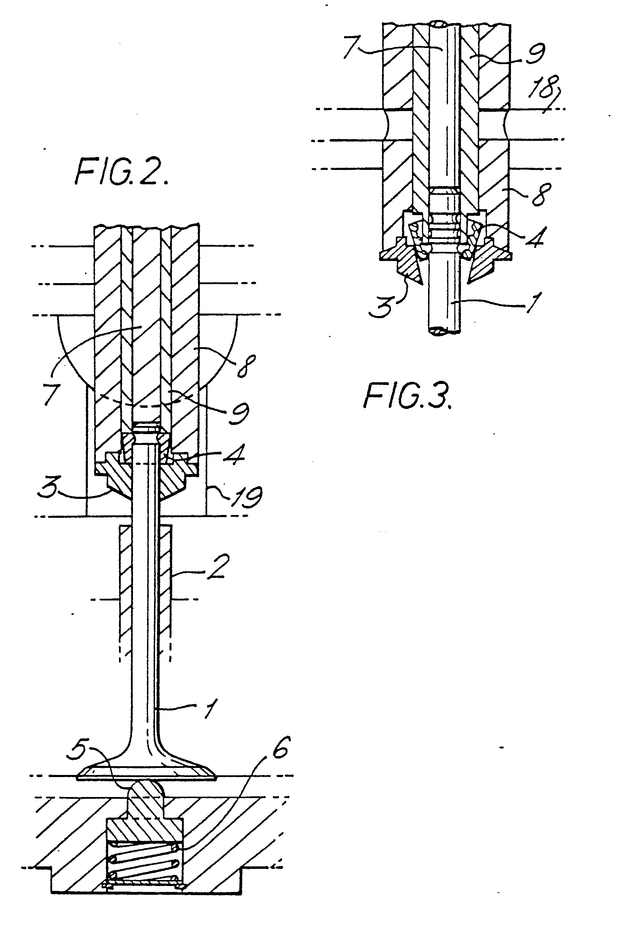

In all embodiments, in the usual way a poppet valve (seen in Figure 2) is inserted into a cylinder head from underneath and is received in a valve guide 2. When assembled, a valve spring (not shown) urges the valve upwardly so that the valve is urged against a seating around a port in the cylinder head. The valve spring acts in compression between an upper surface of the cylinder head (not shown) and a spring cup 3 which is united with the upper end of the stem of the valve 1 by means of cotters 4 in the form of a split collar.

In Figure 2, the parts are shown during a particular stage of assembly and, when assembly is complete, the upper surface of the cotters 4 is approximately level with the upper surface of the valve spring cup 3. The cotters 4 are in the form of a collar which is split about a plane extending through the axis of the valve stem. The cotters have an inward annular projection which engages in an annular recess adjacent the top of the valve stem. The cotters may have two or more inward annular ribs and the valve stem a corresponding number of annular recesses. All this is well known in the art.

In all embodiments, the tools are presented with cylinder heads, in which the valves have been inserted from beneath and in which the valve springs have been placed around the protruding stem of the valve from above. Each valve rests on a button 5 which is loaded by a spring 6 against the valve. Each valve spring carries the valve spring cup at its upper end, which in turn carries in its central recess the split cotters 4. The valve spring is unstressed so that the cotters lie above the upper end of the valve stem.

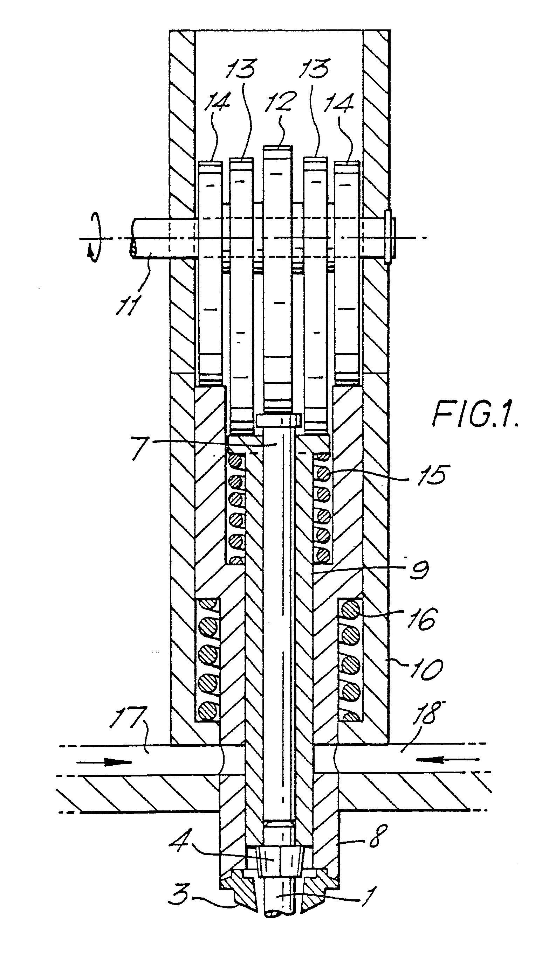

Referring now to Figure 1, the tool has three plungers, namely, a first plunger in the form of a central rod 7, a second plunger in the form of an outer sleeve 8, and a third plunger in the form of an inner sleeve 9. The central rod 7 is arranged to act on the end of the valve stem, the inner sleeve 9 is arranged to define the correct relative spacing between the end of the valve stem and the upper end of the cotters, and the outer sleeve 8 is for acting on the valve spring cup 3 in order to depress the valve spring.

These parts are contained within an outer holder 10, in which a shaft 11 is rotatably mounted. The shaft 11 carries three sets of cams, namely, a first cam 12 which acts on the central rod 7, two identical cams 13 which act on the head of the inner sleeve 9 and two identical cams 14 which act on the outwardly stepped upper end of the outer sleeve 8. Helical compression springs 15 and 16 are provided to cause the return of inner sleeve 9 and outer sleeve 8, respectively.

In operation of the tool of Figure 1, the tool is positioned above the centre line of the parts to be assembled and shaft 11 is rotated, for example by electrical pneumatic or mechanical means. Via the action of the cams 12 to 14, movement is imparted to the tool parts 7, 8 and 9.

First of all the cams 14 depress the outer sleeve 8 causing it to contact the spring cup 3 and depress it by compressing its associated valve spring. While this is taking place, cam 12 causes central rod 7 to contact the top of the stem of the valve 1 and depress it against a spring loaded button which may be of the form shown in Figure 2, to a predetermined position. While central rod 7 and outer sleeve 8 are being depressed, the cams 13 depress the inner sleeve 9. Sleeve 9 moves to a position relative to central rod 7 which corresponds to the distance between the top of the cotters and the top of the valve stem when correctly assembled. It is possible that in achieving this position the inner sleeve 9 will contact the cotters 4 and actually push them below this position, where they will be retained by the valve spring cup 3.

Further rotation of the cams 14 will cause outer sleeve 8 to withdraw allowing the valve spring to expand and cause the valve spring cup 3 to ascend. This upward movement traps the cotters 4 in the cotter groove of the valve, and they are held firm by the pressure of the valve spring against the spring cup. Excessive upward movement of the cotters 4 is prevented by the inner sleeve 9.

Having located and locked the cotters 4 in position, cams 12 and 13 release central rod 7 and inner sleeve 9, until all parts are in the original starting position.

This sequence of operations is repeated for every assembly.

In the above described operation, the split cotters were already pre-assembled in the spring cup. However, the tool has provision for automatically feeding split cotters to the assembly unit, either from a bulk supply or from pre-fixed magazines, and this is achieved by means of guides 17 and 18, which are shown schematically. In practise, the guides would be sloping downwardly instead of horizontal as shown. Naturally, inner sleeve 9 would have to withdraw above the inner end of the guides. It is possible that it would then be desirable for the inner sleeve 9 to be pneumatically controlled, but central rod 7 and outer sleeve 8 could still be cam-actuated.

Referring to Figure 2, the only modification is that the lower ends of the central rod 7, the inner sleeve 9 and the outer sleeve 8 are extended downwardly relative to the remainder of the tool,- to enable the tool to assemble valve cotters where the upper end of the valve stem is in a recess. For example, the upper end of the valve 1 might be surrounded by an annular wall 19. Because of the extended "nose" of the tool, it can sit in the hollow interior of the wall and carry out the same operation as for Figure 1.

Referring to figure 3, this arrangement has specific application in the assembly of multi-ribbed cotters. The profile at the end of sleeve 9 is modified so that, when assembling multi-ribbed cotters, the lower protruding convex rib on the cotter does not prematurely engage in the top concave rib of the valve stem. When assembling multi-groove cotters the phase relationship of the cams 13, 14 is such that sleeve 9 is returned prior to the return of sleeve 8. This ensures that the modified end of sleeve 9 does not become trapped between the inner face of the cotter and the outer surface of the valve stem.

An advantage of a single rotational movement of the shaft 11 for valve cotter assembly is that it allows a fast cycle time with correct synchronisation of movements. It it also possible to monitor the power requirements of the rotational device used, which provide inspection and quality assessment facilities of various elements of the assembly.

**Claims**

1. A tool for assembling split valve cotters on the stems of poppet valves, comprising plungers for engaging the valve spring cup and the cotters, characterised in that there is provided a locating member (7) movable to a predetermined position to position the end of the stem (1) of a poppet valve biassed against resilient means (6), a valve-spring-cup-engaging plunger (8) is movable to depress a valve spring cup (3) sufficiently relative to the stem to permit insertion of split valve cotters (4) and a cotter-engaging plunger (9) is movable to a position at which the upper end of the split valve cotters lie when in position on the valve stem and when the end of the valve stem has been depressed to the predetermined position and in that there is provided at least one cam (14, 13) associated with each plunger for imparting the required axial movements to the plungers in response to a rotary movement of each cam about the same axis.

2. A tool as claimed in claim 1, characterised in that the plunger (8) is shaped so that it can engage the valve spring cup (3) while split valve cotters lie in the cup.

3. A tool as claimed in claim 1 or claim 2, characterised in that the split valve cotters (3) are fed in guides to the required position for assembly.

4. A tool as claimed in any one of the claims 1 to 3, characterised in that the plunger (8) and/or the plunger (9) act against resilient means to automatically return them to their starting positions after a rotation of the associated cam(s) through one revolution.

**Patentansprüche**

1. Werkzeug zum Montieren von geteilten Ventikeilen an den Schäften von Tellerventilen, mit Kolben zum Angreifen an der Ventilfedertasse und den Keilen, dadurch gekennzeichnet, daß ein Ortsbestimmungselement (7) vorgesehen ist, das zum Positionieren des Endes des Schafts (1) eines gegen eine federnd nachgiebige Einrichtung (6) gespannten Tellerventils in eine vorbestimmte Position bewegbar ist, daß ein Ventilfedertassen-Angreifkolben (8) derart bewegbar ist, daß er eine Ventilfedertasse (3) in bezug auf den Schaft ausreichend niederdrückt, so daß ein Einführen von geteilten Ventilkeilen (4) ermöglicht ist, und daß ein Keil-Angreifkolben (9) in eine Position bewegbar ist, bei der das obere Ende der geteilten Ventilkeile liegt, wenn sich diese an dem Ventilschaft in Position befinden und wenn das Ende des Ventilschafts in die vorbestimmte Position niedergedrückt worden ist, und daß zugeordnet jedem Kolben wenigsten ein Steuerflächenglied (14, 13) vorgesehen ist, um den Kolben ansprechend auf eine rotationsmäßige Bewegung jedes Steuerflächenglieds um dieselbe Achse die erforderlichen axialen Bewegungen zu verleihen.

2. Werkzeug nach Anspruch 1, dadurch gekennzeichnet, daß der Kolben (8) derart geformt ist, daß er an der Ventilfedertasse (3) angreifen kann, während geteilte Ventilkeile in der Tasse liegen.

3. Werkzeug nach Anspruch 1 oder Anspruch 2, dadurch gekennzeichnet, daß die geteilten Ventilkeile (3) in Führungen zu der erforderlichen Stelle für die Montage befördert werden.

4. Werkzeug nach einem der Ansprüche 1 bis 3, dadurch gekennzeichnet, daß der Kolben (8) und/oder der Kolben (9) gegen eine federnd nachgiebige Einrichtung wirkt zum automatischen Zurückführen derselben in ihre Ausgangspositionen nach einer Rotation des zugeordneten Steuerflächenglieds (der zugeordneten Steuerflächenglieder) um eine Umdrehung.

**Revendications**

1. Outil pour l'assemblage de clavettes fendues de soupape sur les queues de soupape en forme de champignon, comportant des pistons pour pousser la cuvette de ressort de soupape et les clavettes, caractérisé en ce qu'il comporte un élément de repérage (7) déplaçable vers une position prédéterminée afin de positionner l'extrémité de la queue (1) d'une soupape en forme de champignon repoussée par un moyen formant ressort (6), un piston poussant une cuvette de ressort de soupape (8), est déplaçable pour abaisser une cuvette de ressort de soupape (3), suffisamment par rapport à la queue pour permettre l'insertion de clavettes fendues de soupape (4), et un piston d'engagement de clavette (9) est déplaçable vers une position dans laquelle se trouve l'extrémité supérieure des clavettes fendues de soupape, lorsqu'elles sont en position, sur la queue de soupape et lorsque l'extrémité de la queue de soupape a été abaissée dans la position prédéterminée et en ce qu'au moins une came (14, 13) est associée avec chaque piston, pour imprimer les mouvements axiaux requis aux pistons en réponse à un mouvement de rotation de chaque came autour du même axe.

2. Outil selon la revendication 1, caractérisé en ce que le piston (8) a une forme telle qu'il peut pousser la cuvette de ressort de soupape (3), tandis que les clavettes fendues de soupape se trouvent dans la cuvette.

3. Outil selon l'une des revendications 1 ou 2, caractérisé en ce que les clavettes fendues de soupape (3) sont alimentées par des guides vers la position requise pour l'assemblage.

4. Outil selon l'une quelconque des revendications 1 à 3, caractérisé en ce que le piston (8) et/ou le piston (9) agissent contre un moyeu formant ressort pour les repousser automatiquement dans leurs positions de départ après une rotation des cames associées lors d'une révolution.

FIG.1.

FIG.2.

FIG.3.